# EUROPÄISCHE PATENTANMELDUNG

(11) **EP 1 486 475 A1**
(43) Veröffentlichungstag der Anmeldung: **15.12.2004**
(21) Anmeldenummer: 04012413.3
(22) Anmeldetag: 26.05.2004
(51) Int. Cl.: C04B 38/08, C04B 28/26, C04B 14/24, C04B 40/00

(54) **Verfahren zur Herstellung eines Formkörpers aus einem Leichtzuschlagstoff-Granulat und einem Bindemittel**

(30) Priorität: 11.06.2003 DE 10326252
(71) Anmelder: DENNERT PORAVER GmbH, 92353 Postbauer-Heng (DE)
(72) Erfinder: Schmid, Hermann Andreas, 73433 Aalen (DE)
(74) Vertreter: Hübner, Gerd, Dipl.-Phys.

(57) **Zusammenfassung**

Ein Verfahren zur Herstellung eines Formkörpers aus einem Leichtzuschlagstoff-Granulat und einem anorganischen Bindemittel weist folgende Verfahrensschritte auf:
- Bereitstellen eines viskosen Bindemittels, das auf der Basis von Kieselgur und Natron- oder Kalilauge hergestellt ist,
- Vermischen des Bindemittels mit Leichtzuschlagstoff-Granulat,
- Formgeben der Leichtzuschlagstoff-Granulat-Bindemittel-Mischung, und
- Thermische Beaufschlagung der Leichtzuschlagstoff-Granulat-Bindemittel-Mischung unter Aufschäumen und Bindung der Leichtzuschlagstoff-Granulat-Partikel in einer geschäumten Bindemittelmatrix zur Bildung des Formkörpers.

## Beschreibung

Die Erfindung betrifft ein Verfahren zur Herstellung eines Formkörpers aus einem Leichtzuschlagstoff-Granulat, insbesondere Blähglas-Granulat, und einem Bindemittel.

Derartige Formkörper, wie sie insbesondere als Platte zum Einsatz kommen, sind für verschiedenste Verwendungszwecke geeignet. So können sie als Brandschutzplatten, Kernmaterial für Bauelemente und Fertigbauteile, wie beispielsweise Brandschutztüren, Kabinenwände, Decken und dergleichen verwendet werden. Ferner ist ein Einsatz als faserfreie Platten für den Trockenbau zum Ausfachen von Ständerkonstruktionen nicht tragender Wände ein typisches Anwendungsbeispiel. Auch als faserfreie Schallschutzplatte, z. B. als Kernmaterial für Schallschutzwände gegen Straßen-, Bahn- und Flugverkehrslärm sowie in Schießständen, als mehrschichtige Breitbandabsorber mit geschlitzten, gelochten oder erhabenen Oberflächenstrukturen, Auskleidungen in Helmholtz-Resonatoren, Kernmaterial für Abgasschalldämpfer, Akustikdecken und so weiter werden solche Formkörper eingesetzt.

Aus dem Stand der Technik sind verschiedenste Formkörper aus Leichtzuschlagstoff-Granulaten und anorganischen Bindemittelsystemen bekannt.

Bei der keramischen Bindung wird ein pulverförmiger Stoff - gegebenenfalls auch eine Suspension davon mit variablem Flüssigkeitsgehalt - verdichtet und in einem anschließenden thermischen Prozess versintert. So ist es aus der DE 44 10 242 C2 bekannt, Blähtonkugeln mit einem tonkeramischen Schlicker mehrfach zu umhüllen, die so umhüllten Blähtonkugeln in Metallformen zu gießen, zu formen und zu trocknen, um sie anschließend durch Brennen zu sintern.

Bei dem Verfahren gemäß DE 100 20 955 A1 wird eine Leichtzuschlagstoff-Granulatschüttung ohne Bindemittel- oder Flussmittelzusätze verdichtet und gesintert. Das verwendete Granulat bläht dabei mit Hilfe des eingeschlossenen Resttreibmittels nach, wodurch die Zwischenräume der haufwerksporigen Schüttung geschlossen werden und die Berührungsflächen der Granulatpartikel miteinander verschmelzen.

Neben dem Einsatz von hydraulischen Bindungssystemen, wie Zement-, Kalk-, Magnesit- und Gipsbindungen in Anwesenheit von Wasser und Kohlendioxid ist aus der EP 0 763 506 B 1 ein Phosphatbindungssystem bekannt. Hier wird Blähglasgranulat mit einer alkalischen Silikat-Phosphatlösung benetzt, verfestigt, getrocknet und gehärtet, um eine Leicht-Dämmplatte herzustellen.

Schließlich sind für die Herstellung von Formkörpern aus Leichtzuschlagstoff- und insbesondere Blähglasgranulaten Wasserglasbindungen gängig. So offenbart die DE 32 46 502 A1 die Herstellung von mit Wasserglas gebundenen Formkörpern, bei der der Wasserglaslösung festigkeitserhöhende Metalloxide oder Mineralien zugesetzt werden. Bei der in DE 197 12 835 C2 offenbarten Dämmplattenherstellung wird ausschließlich mit flüssigem Wasserglas benetzt sowie nach Formung und Trocknung der Grünkörper einer speziellen Flüssigphasensinterung unterworfen.

Der Erfindung liegt die Aufgabe zugrunde, ein Verfahren zur Herstellung eines Formkörpers aus Leichtzuschlagstoff-Granulat und insbesondere Blähglas-Granulat anzugeben, bei dem das anorganische Bindemittelsystem auf der Basis eines gut verfügbaren Naturstoffes hergestellt wird und aufgrund seiner überraschenden Verhaltensweisen unter thermischer Beaufschlagung für die Herstellung von Formkörpem aus Leichtzuschlagstoff-Granulaten vorteilhafte Bindungseigenschaften aufweist.

Diese Aufgabe wird durch die im Kennzeichnungsteil des Anspruches 1 angegebenen Merkmale gelöst. Kernpunkt dabei ist das spezielle viskose Bindemittel, das auf der Basis von Kieselgur - einem Naturstoff - und Natron- oder Kalilauge hergestellt wird. Je nach Wassergehalt bildet sich ein mehr oder weniger viskoses Gel, was im Folgenden noch näher erläutert wird. Grundsätzlich ist die Herstellung dieses viskosen Bindemittels in der EP 0 893 418 A1 offenbart.

In diesem Bindemittel ist physikalisch und chemisch Wasser gebunden. Insbesondere das physikalisch gebundene Wasser verdampft bei einer raschen thermischen Beaufschlagung explosionsartig, sodass die von dem Bindemittel um das Leichtzuschlagstoff-Granulat gebildete Bindemittelmatrix aufbläht und einen feinporigen Schaum erzeugt. Dieser umschließt die Leichtzuschlagstoff-Granulatpartikel besonders innig, sodass die so gebundenen Formkörper eine vergleichsweise hohe Festigkeit aufweisen. Auch ist ihre Dämmwirkung aufgrund der porigen Bindemittelmatrix verbessert.

Die Herstellung des viskosen Bindemittels kann durch Kochen von aufgemahlenem Kieselgur in Natron- oder Kalilauge erfolgen.

Eine bezüglich des Energieaufwandes günstigere Variante kommt ohne dieses Kochen oder eine entsprechende Dampfbehandlung aus. Dazu wird Kieselgur in Wasser gegebenenfalls unter mechanischer Einwirkung gelöst und anschließend Natriumhydroxid zugegeben. Es bildet sich - wie in der Beschreibung des Ausführungsbeispiels noch näher erläutert wird - das viskose Bindemittel.

In einer bevorzugten Weiterbildung des erfmdungsgemäßen Verfahrens ist vorgesehen, zum Bindemittelversatz Boroxid beispielsweise in Form von Borsäure oder Borax zuzugeben. Damit verbessern sich die physikalischen Eigenschaften der Bindemittelmatrix nach der thermischen Behandlung deutlich, was beispielsweise die Alkalibeständigkeit und die verringerte Wasserlöslichkeit betrifft. In der Bindemittelmatrix bilden sich nämlich stabile Natriumborosilikate.

Eine Besonderheit des Kieselgur-basierten Bindemittels liegt in der hohen Bandbreite der einzustellenden Viskosität. So kann es als niedrigviskose Bindemittelflüssigkeit mit einer Viskosität von etwa 1 bis 10⁸ mPas hergestellt werden. Diese Bindemittelflüssigkeit hat gute Benetzungseigenschaften insbesondere für Blähglasgranulatpartikel und erzeugt je nach Wassergehalt und Viskosität eine mehr oder minder dicke Bindemittelschicht auf dem Granulat. Dabei wird das poröse Blähglasgranulat jedoch nicht oder nur unwesentlich mit Bindemittel getränkt, was gegenüber dem Benetzen mit Wasserglas einen weiteren signifikanten Vorteil darstellt. Letzteres wird wegen seiner niedrigen Viskosität nämlich zu einem erheblichen Teil vom Granulat aufgesogen und steht damit beispielsweise nicht für die in der eingangs genannten Druckschrift DE 197 12 835 C2 beschriebene Flüssigphasensinterung und die entsprechende Ausbildung von Bindungsstegen zwischen den Granulatpartikeln zur Verfügung.

In seiner anderen bevorzugten Erscheinungsform ist das Kieselgur-basierte Bindemittel als hochviskoses, durch Trocknen und Granulieren des gekochten Kieselgur-Ansatzes hergestelltes Bindemittelgranulat mit einer kochten Kieselgur-Ansatzes hergestelltes Bindemittelgranulat mit einer Viskosität größer als 10⁸ mPas zu verwenden. Zur Herstellung wird dabei das durch das Kochen von Kieselgur in Natron- oder Kalilauge erhältliche Bindemittel-Gel getrocknet, bis es in einen festen Zustand übergeht. Mit einem Brecher oder einer Mühle können die entsprechenden Stücke zerkleinert und über eine Siebung in die gewünschte Sieblinie fraktioniert werden. Werden die erhältlichen Bruchstücke bei mäßiger Temperatur kurz getrocknet, bildet sich auf den Bruchstücken eine harte Schale und damit ein rieselfähiges Granulat. Im Inneren der Granulatpartikel ist jedoch noch genügend Feuchtigkeit eingeschlossen, was bei einer thermischen Beaufschlagung wiederum zum Verdampfen des Restwassers und entsprechendes Aufblähen des Bindemittelgranulates führt.

Niedrigviskose Bindemittelflüssigkeit und Bindemittelgranulat können jeweils separat, aber auch gemeinsam zur Erstellung des Bindungssystems im Formkörper verwendet werden. Durch die jeweiligen Anteile lässt sich dabei die Haufwerksporigkeit des Formkörpers gezielt steuern. Wird nur niedrigviskose Bindemittelflüssigkeit verwendet, die die Blähglasgranulatpartikel mit einer dünnen Schicht umhüllt, so wird der Schäumgrad der Bindemittelflüssigkeit nicht ausreichen, die Haufwerksporen in dem Formkörper zwischen den einzelnen Blähglasgranulatpartikeln zu füllen. Entsprechend hoch ist der Anteil von Haufwerksporen. Durch gezielte Einmischung von Bindemittelgranulat mit entsprechenden Korngrößen können die Freiräume zwischen den Granulatpartikeln des Leichtzuschlagstoffes mehr oder weniger stark gefüllt werden. Nach dem Aufschäumen des Bindemittelgranulates ergibt sich ein damit mehr oder weniger starker Verschluss der Haufwerksporen. Bei hohem Anteil an hochviskosem Bindemittelgranulat wird durch dessen Aufblähen ein Formkörper ohne Haufwerksporen entstehen.

Gemäß einer weiteren bevorzugten Ausführungsform des erfindungsgemäßen Verfahrens wird ein Problem gelöst, dass übliche Herstellungsprozesse von Formkörpern aus Leichtzuschlagstoffen und anorganischen Bindemittelsystemen oft haben. So wird bei Verwendung von beispielsweise keramischen Bindungsmitteln vor der eigentlichen Sinterung oft keine ausreichende Grünstandsfestigkeit des Formkörpers erzielt, sodass der gesamte Prozess in entsprechenden Formen stattfinden muss. Durch das erfindungsgemäße Bindemittelsystem kann dies umgangen werden, da beispielsweise zum Verkleben eines Granulat-Gemisches von Leichtzuschlagstoffen bereits die Zugabe von nicht zu hochviskosem Bindemittelgranulat und entsprechendes Verpressen ausreichen kann, dem damit hergestellten Formkörper zum Versetzen innerhalb der Produktionsanlage ausreichende Festigkeit zu geben. Dies kann durch Verwenden eines vorzugsweise anorganischen Klebemittels, insbesondere der niedrigviskosen Kieselgur-Bindemittelflüssigkeit noch weiter perfektioniert werden. Insbesondere ist bei Verwendung der Kieselgur-Bindemittelflüssigkeit kein systemfremdes Klebemittel im Formkörper enthalten.

Der durch thermische Beaufschlagung mit einer geschäumten Bindemittelmatrix hergestellte Formkörper kann durch weitere thermische Beaufschlagung unter Sinterung, vorzugsweise einer Trockensinterung, der geschäumten Bindemittelmatrix weiter gehärtet werden. Diese "Trockensinterung" läuft schwindungsfrei ab, sodass der Formkörper bereits sehr maßhaltig in einer entsprechenden Form hergestellt werden kann.

Gemäß einem weiteren bevorzugten Verfahrensschritt kann der in seiner Bindemittelmatrix geblähte und gegebenenfalls gesinterte Formkörper durch eine Temperung eine gezielte Züchtung von Mikro-Kristallen aus der amorphen Bindemittelmatrix und/oder dem Blähglasgranulat erzeugen. Bevorzugtermaßen kann hierzu dem Bindemittel Glasmehl, fein aufgemahlenes Kaolin, Zinkoxid oder - bevorzugtermaßen - Zinnoxid als Kristallisationskeime zugegeben werden. Die gezüchteten Kristalle haben innerhalb der amorphen Glasmatrix einen geringfügig abweichenden Wärmeausdehnungskoeffizienten, wodurch die Kristalle aus der Glasmatrix herausbrechen und je nach Temperzeit eine definierte Mikroporosität erzeugen. Diese ermöglicht eine verstärkte Schalleindringung in den Formkörper und insbesondere in die Mikroporen im Bindemittelschaum, wodurch das Gesamtbauteil eine deutlich verbesserte Schalldämpfung bietet. Bei Verwendung der erfindungsgemäß hergestellten Formkörper, beispielsweise als Filterelemente, kann durch das Mikro-Kristallwachstum und die entsprechend einzustellende Mikroporosität der längenspezifische Strömungswiderstand eines porösen Filterkörpers fein abgestimmt werden.

### Weitere Merkmale, Vorteile und Einzelheiten der Erfindung ergeben sich aus der nachfolgenden

### Beschreibung von Ausführungsbeispielen:

Die Herstellung des Bindemittels wird wie folgt durchgeführt:

Natürliche Kieselgur wird trocken oder nass aufgemahlen und anschließend in Natron- oder Kalilauge unter Versetzung mit Glasmehl (beispielsweise Glasstaub aus der Granulatproduktion) und Zinnoxid als Kristallisationskeimen aufgekocht. Es bildet sich je nach Wassergehalt eine Bindemittelflüssigkeit - worunter bis zu einem Gel verstanden werden soll - mit einer Viskosität von etwa 1 bis 10⁸ mPas.

In einer modifizierten Herstellungsweise kann auf das Kochen der Kieselgut-Suspension verzichtet werden. Es ist nämlich auch möglich, Kieselgur in einem Verhältnis 1:2 in Wasser aufzuschlämmen und für ca. 1 Stunde in einer Kugelmühle aufzumahlen. Durch den Mahlvorgang steigt die Temperatur der Suspension auf ca. 40°C an.

Zu dieser vortemperierten Suspension wird zur Bildung von Natronlauge Natriumhydroxid in Form von Perlen oder Pellets zugegeben, die sich in einem exothermen Prozess unter Energieabgabe lösen. Die Suspension erwärmt sich dadurch weiter, Temperaturen von nahezu 100°C können erreicht werden. Wird die Zugabe und Lösung des Natriumhydroxids in einem isolierten Rührbehälter durchgeführt, hält sich diese hohe Temperatur noch länger, was eine Gelbildung bei der Bindemittelflüssigkeit begünstigt. Die Viskosität dieser Bindemittelflüssigkeit nimmt im Übrigen mit abnehmendem Wassergehalt kontinuierlich zu.

In einer weiteren alternativen Herstellungsweise wird auf das vorstehend beschriebene Aufmahlen des Kieselgurs verzichtet. Vielmehr findet ein Auflösen und Aufquirlen in vorzugsweise auf 50°C vortemperiertem Wasser statt, worauf das Natriumhydroxid zugegeben und beispielsweise für weitere 20 min. gequirlt wird, um ein reaktionsfähiges Bindemittelgel zu erhalten. Lediglich grobe Bestandteile des Kieselgurs sind aus der Suspension vorteilhafter Weise abzusieben.

Zur Verbesserung der physikalischen Eigenschaften des Bindemittels - insbesondere zur Erhöhung der Alkalibeständigkeit und Herabsetzung der Wasserlöslichkeit nach dem späteren Sintern - kann der Kieselgur-Suspension neben dem Natriumhydroxid noch Boroxid in Form von Borsäure oder Borax zugegeben werden, das zusammen mit dem Natriumhydroxid in der Suspension - wie oben angesprochen - verquirlt wird.

Nachfolgend wird ein Beispielversatz für die Herstellung des Kieselgur-basierten Bindemittels angegeben, der auf 1 mol Kieselsäure bzw. 1 kg des erdfeuchten Kieselgurs mit einer Feuchte von 32 % bezogen ist. Der Schmelzpunkt dieses Materials liegt bei ca. 700°C, sodass es bei der im Folgenden noch näher spezifizierten und erläuterten Versinterung bei einer Temperatur von 680°C ein sehr wirksames, beständiges und gut zu verarbeitendes Bindemittel darstellt.

Die folgende Tabelle 1 gibt einen Beispielversatz für dieses Bindemittel an.

| **Materialbezeichnung** | **chemische Formel** | **molarer Versatz** | **Masseversatz** | **Versatz in Masse %** |
|---|---|---|---|---|
| **Kieselsäure** | **SiO**_{**2**} | **1 mol** | **(Kieselgur erdfeucht 32%) 1,000 kg** | **35 %** |
| **Wasser** | **H**_{**2**}**O** | **8 mol** | **1,200 kg** | **40 %** |
| **Natriumoxid** | **Na**_{**2**}**O** | **0,4 mol** | **0,400 kg** | **14 %** |
| **Boroxid** | **B**_{**2**}**O**_{**3**} | **0,2 mol** | **0,250 kg** | **9 %** |

Im 3-Stoff-Diagramm SiO₂/Na₂O/B₂O₃ können die Anteilsbereiche dieser Bindemittel-Komponenten wie folgt angegeben werden:

| **Materialbezeichnung** | **chemische Formel** | **molarer Bereich** | **Massebereich** |
|---|---|---|---|
| **Kieselsäure** | **SiO**_{**2**} | **1,0 mol** | **1,000 kg** |
| **Wasser** | **H**_{**2**}**O** | **4,0 bis 50 mol** | **1 bis 15 kg** |
| **Natriumoxid** | **Na**_{**2**}**O** | **0,2 bis 1 mol** | **0,2 bis 1 kg** |
| **Boroxid** | **B**_{**2**}**O**_{**3**} | **0,05 bis 5 mol** | **0,05 bis 5 kg** |

Die vorstehenden Zusammensetzungsbereiche in dem genannten 3-Stoff-Diagramm sind so ausgelegt, dass die niedrigschmelzenden Zusammensetzungen mit Schmelztemperaturen zwischen ca. 550 bis 1000°C davon abgedeckt sind.

Die niedrigviskose Bindemittelflüssigkeit kann - wie eingangs bereits beschrieben - durch Trocknen und Granulieren zu einem Bindemittelgranulat auf Kieselgurbasis mit einer Viskosität über 10⁸ mPas weiterverarbeitet werden.

Als Startpunkt für die Herstellung einer Platte aus Blähglasgranulat und einem Kieselgur-basierten Bindemittel wird nun Blähglasgranulat in einem handelsüblichen Mischaggregat chargenweise oder kontinuierlich angemischt. Die weiteren Versatzbestandteile werden volumetrisch oder gravimetrisch zudosiert.

Die niedrigviskose Bindemittelflüssigkeit dient dabei in erster Linie zur Verklebung der festen Versatzbestandteile und das hochviskose Bindemittelgranulat zur variablen Steuerung wichtiger Werkstoffkenndaten, wie beispielsweise der Dichte, Festigkeit, Haufwerksporigkeit, des Wasser-dampf-Diffusionskoeffizienten und des längenspezifischen Strömungswiderstandes.

Folgende Anteilsgrenzen sollen für die einzelnen Bestandteile gelten:
- Blähglasgranulat in einer Korngröße von 0 bis 16 mm: 30 bis 95 Masse-%
- hochviskoses Bindemittelgranulat mit Feststoffgehalt 50 bis 90 % und Korngröße von 0 bis 10 mm: bis 70 Masse-% und
- niedrigviskose Bindemittelflüssigkeit mit Feststoffgehalt 5 bis 50 %: bis 50 Masse-%.

Die vorstehend erwähnten Granulate können eine einheitliche Korngröße, eine bimodale Kornverteilung, aber auch ein beliebig breites Komband oder Gemische verschiedener Leichtzuschlagstoffe enthalten.

Das Mischgut aus Blähglasgranulat und Bindemittelanteil kann lose in einen flachen Formkasten gefüllt, mit oder ohne Verdichtung weiterverarbeitet werden, mit einer Strangpressanlage als Endlosstrang extrudiert, mit einer Ram- oder Schieberpresse zu definierten Formkörpern endabmessungsnah verpresst oder anderweitig in eine entsprechende Form des gewünschten Körpers gebracht werden. Falls verpresst wird, liegt der Pressdruck zweckmäßigerweise in der Größenordnung von 0,1 bis 10 N/mm². In diesem Zusammenhang ist festzuhalten, dass nach dem Mischen der Versatzbestandteile diese hauptsächlich durch van-der-Waalsche-Kräfte zusammengehalten werden, nach dem Pressen ist ferner ein mechanischer Eingriff zwischen Bindemittelmatrix und Granulat in Form einer - bildlich gesprochen - Verzahnung oder Verhakung gegeben.

Derart geformte Formkörpergrünlinge erreichen aufgrund der Verwendung insbesondere des hochviskosen Bindemittelgranulates schon eine ausreichende Festigkeit, um für weitere Herstellungsschritte entformt und transportiert werden zu können. Zwischen-Trocknungsschritte können daher entfallen, was das erfindungsgemäße Herstellungsverfahren gegenüber dem Stand der Technik rationeller und mit weniger Energieaufwand durchführbar werden lässt.

Die so erstellten Formkörpergrünlinge werden beispielsweise durch eine Heißgasbehandlung, aber auch durch Heizplatten, Induktionsheizung oder durch chemische exotherme Reaktionen thermisch relativ schlagartig beaufschlagt. Dieser Blähprozess beginnt bei etwa 150° C und geht bei höheren Temperaturen in den Sinterprozess über, der abhängig von der Mischgutzusammensetzung vornehmlich bei Temperaturen zwischen 500 und 1000° C, bevorzugt bei 680° C erfolgt. Dadurch schäumen die Bestandteile der Bindemittelmatrix (niedrigviskose Bindemittelflüssigkeit und/oder hochviskoses Bindemittelgranulat) auf und umhüllen die Blähglasgranulatkörper komplett oder teilweise mit einer schaumartigen Bindemittelstruktur. Der Formkörper erhält damit eine deutlich höhere Festigkeit beispielsweise im Vergleich zu mit Wasserglas gebundenen Formkörpern.

Falls gewünscht, kann in einem nachfolgenden Temperprozess bei beispielsweise 700° C ein Kristallisationswachstum in der Bindemittelmatrix zur Erzeugung einer Mikroporosität durchgeführt werden.

Die folgende Tabelle zeigt neun Beispielversätze für verschiedene Probekörper als Beispiel für die erfindungsgemäße Herstellung von Schallschutzplatten. Darin bedeuten:
- grobkörniges Granulat: Blähglasgranulat mit Körnung 1-16 mm, vorzugsweise 2-4 mm
- feinkörniges Granulat: Blähglasgranulat mit Körnung < 1 mm, vorzugsweise 0,25 - 0,5 mm
- Bindergranulat: hochviskoses Bindemittelgranulat mit einer Viskosität von η = 10¹² mPas
- Flüssigbinder: niedrigviskose Bindemittelflüssigkeit mit einer Viskosität von η = 10³ mPas

Bei den Probekörpern 1 bis 5 ist zusätzliches Stützkom zu Erhöhung der Festigkeit enthalten.

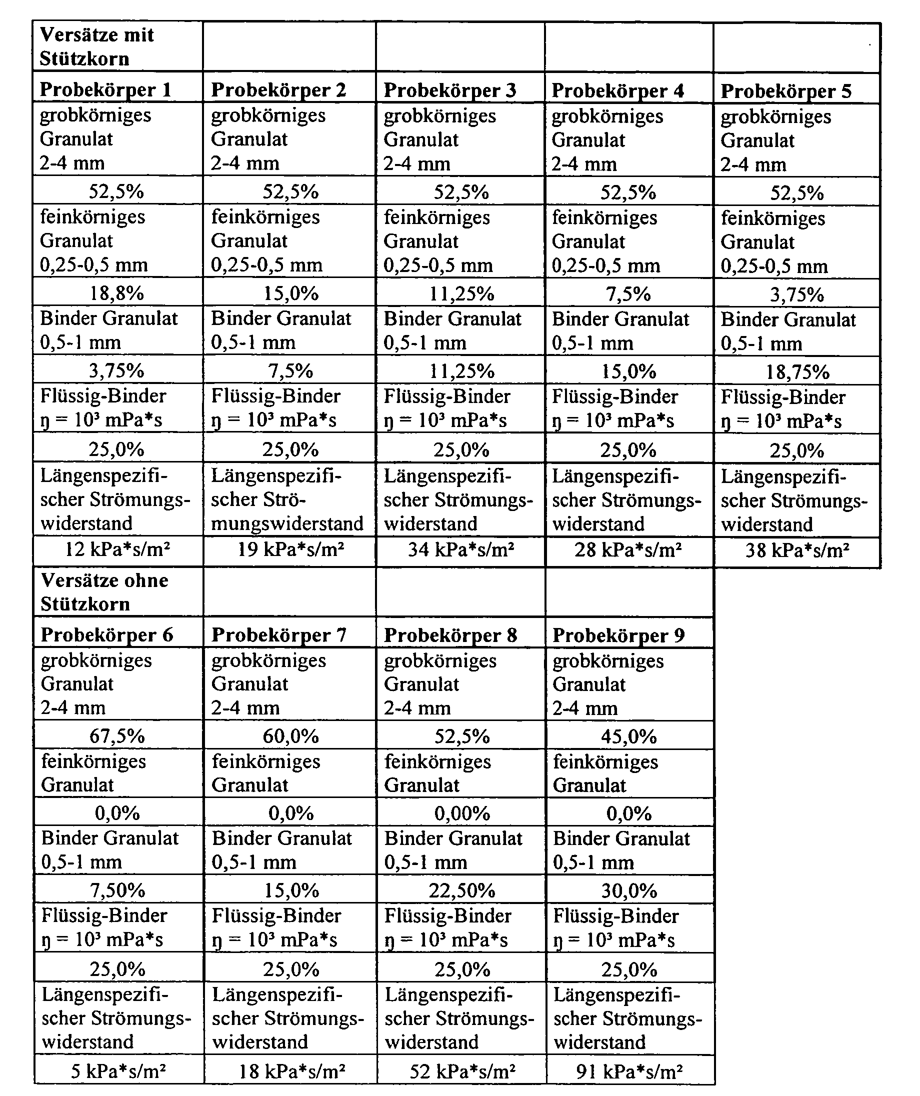

Zusammenfassend weisen Formkörper, die auf Blähglasgranulat-Basis mit einer gesinterten Bindemittelmatrix auf Kieselgur-Basis hergestellt sind gegenüber dem Stand der Technik, der in aller Regel lediglich bei niedrigeren Temperaturen getrocknete Platten offenbart, wesentlich bessere Eigenschaften auf, wie
- Druck- und Biegefestigkeit
- geringere Wasseraufnahme
- Wasserbeständigkeit
- verbesserte Alkalibeständigkeit
- deutlich geringere Ausblühneigung
- steuerbarer längenspezifischer Strömungswiderstand

## Patentansprüche

1. Verfahren zur Herstellung eines Formkörpers aus einem Leichtzuschlagstoff-Granulat, insbesondere Blähglas-Granulat, und einem anorganischen Bindemittel, **gekennzeichnet durch** folgende Verfahrensschritte:
- Bereitstellen eines viskosen Bindemittels, das auf der Basis von Kieselgur und Natron- oder Kalilauge hergestellt ist,
- Vermischen des Bindemittels mit Leichtzuschlagstoff-Granulat,
- Formgeben der Leichtzuschlagstoff-Granulat-Bindemittel-Mischung, und
- Thermische Beaufschlagung der Leichtzuschlagstoff-Granulat-Bindemittel-Mischung unter Aufschäumen und Bindung der Leichtzuschlagstoff-Granulat-Partikel in einer geschäumten Bindemittelmatrix zur Bildung des Formkörpers.

2. Verfahren nach Anspruch 1, **dadurch gekennzeichnet, dass** das viskose Bindemittel durch Kochen von aufgemahlenem Kieselgur in Natron- oder Kalilauge hergestellt ist.

3. Verfahren nach Anspruch 1, **dadurch gekennzeichnet, dass** das viskose Bindemittel durch Auflösen von Kieselgur in Wasser und anschließende Zugabe von Natriumhydroxid hergestellt ist.

4. Verfahren nach einem der vorgenannten Ansprüche, **dadurch gekennzeichnet, dass** dem viskosen Bindemittel bei der Herstellung Boroxid zugegeben wird.

5. Verfahren nach einem der vorgenannten Ansprüche, **dadurch gekennzeichnet, dass** das Bindemittel als niedrigviskose Bindemittelflüssigkeit mit einer Viskosität von etwa 1 bis 10⁸ mPas bereitgestellt wird.

6. Verfahren nach einem der Ansprüche 1 bis 4, **dadurch gekennzeichnet, dass** das Bindemittel als hochviskoses, durch Trocknen und Granulieren des Kieselgur-Ansatzes hergestelltes Bindemittelgranulat mit einer Viskosität größer als 10⁸ mPas bereitgestellt wird.

7. Verfahren nach einem der vorgenannten Ansprüche, **dadurch gekennzeichnet, dass** die thermische Beaufschlagung durch eine Heißgasbehandlung erfolgt.

8. Verfahren nach Anspruch 5, **dadurch gekennzeichnet, dass** zum Verkleben eines Granulat-Gemisches aus Blähglas- und Bindemittel-Granulat ein anorganisches Klebemittel, insbesondere die Kieselgur-Bindemittelflüssigkeit verwendet wird.

9. Verfahren nach Anspruch 6, **dadurch gekennzeichnet, dass** zum Verkleben eines Granulat-Gemisches aus Blähglas- und Bindemittel-Granulat ein organischer Kleber verwendet wird.

10. Verfahren nach einem der vorgenannten Ansprüche, **dadurch gekennzeichnet, dass** der Formkörper durch thermische Beaufschlagung unter Sinterung, vorzugsweise einer Trockensinterung, der geschäumten Bindemittelmatrix weiter gehärtet wird.

11. Verfahren nach einem der vorgenannten Ansprüche, **dadurch gekennzeichnet, dass** in das Bindemittel Glasmehl, fein aufgemahlenes Kaolin, Zinkoxid oder vorzugsweise Zinnoxid als Kristallisationskeime eingegeben werden.

12. Verfahren nach Anspruch 8, **dadurch gekennzeichnet, dass** durch eine Temperung aus der amorphen Bindemittelmatrix und/oder dem Blähglas-Granulat Mikro-Kristalle zur Erzeugung einer Mikroporosität im Formkörper gezüchtet werden.

13. Verfahren nach Anspruch 10 oder 12, **dadurch gekennzeichnet, dass** das Sintern bzw. die Temperung bei Temperaturen zwischen 500 und 1000° C, vorzugsweise zwischen 680 und 700° C, durchgeführt werden.

14. Verfahren nach einem der vorgenannten Ansprüche, **gekennzeichnet durch** folgende Anteilsgrenzen der einzelnen Bestandteile:
- Schaumglasgranulat in einer Korngröße von 0 bis 16 mm:
30 bis 95 Masse-%
- hochviskoses Bindemittelgranulat mit Feststoffgehalt 50 bis 90 % und
Korngröße von 0 bis 10 mm:
bis 70 Masse-%
- niedrigviskose Bindemittelflüssigkeit mit Feststoffgehalt 5 bis 50 %:
bis 50 Masse-%.

15. Verfahren nach einem der vorgenannten Ansprüche, **dadurch gekennzeichnet, dass** die Leichtzuschlagstoff-Granulat-Bindemittel-Mischung nach oder beim Formgeben mit einem Pressdruck von vorzugsweise 0, 1 bis 10 N/mm² verpresst wird.

16. Verfahren nach einem der vorgenannten Ansprüche, **dadurch gekennzeichnet, dass** die Formgebung der Leichtzuschlagstoff-Granulat-Bindemittel-Mischung durch Einfüllen in einen Formkasten, Strangextrusion oder Verpressen mittels einer Schieberpresse erfolgt.

17. Verfahren nach einem der vorgenannten Ansprüche, **dadurch gekennzeichnet, dass** die Aufschäumung des Bindemittels ab etwa 150°C stattfindet.
